# EUROPEAN PATENT APPLICATION

(11) **EP 3 769 987 A1**
(43) Date of publication of application: **27.01.2021**
(21) Application number: 20185915.4
(22) Date of filing: 15.07.2020
(51) Int. Cl.: B60J 5/04

(54) **VEHICLE-BODY STRUCTURE OF VEHICLE, AND VEHICLE**

(30) Priority: 23.07.2019 JP 2019135592
(71) Applicant: MAZDA MOTOR CORPORATION, Fuchu-cho, Aki-gun Hiroshima 730-8670 (JP)
(72) Inventor: Suzuki, Kaori, Fuchu-cho, Aki-gun,, Hiroshima 730-8670 (JP); Honda, Masanori, Fuchu-cho, Aki-gun,, Hiroshima 730-8670 (JP); Okuyama, Tomohito, Fuchu-cho, Aki-gun,, Hiroshima 730-8670 (JP); Nonaka, Ryuji, Fuchu-cho, Aki-gun,, Hiroshima 730-8670 (JP); Fujii, Hideaki, Fuchu-cho, Aki-gun,, Hiroshima 730-8670 (JP); Shouno, Noboru, Fuchu-cho, Aki-gun,, Hiroshima 730-8670 (JP); Nakayama, Daisuke, Fuchu-cho, Aki-gun,, Hiroshima 730-8670 (JP); Kizaki, Isamu, Fuchu-cho, Aki-gun,, Hiroshima 730-8670 (JP); Kaiki, Eri, Fuchu-cho, Aki-gun,, Hiroshima 730-8670 (JP); Sugimura, Yuichi, Fuchu-cho, Aki-gun,, Hiroshima 730-8670 (JP); Shibahara, Taei, Fuchu-cho, Aki-gun,, Hiroshima 730-8670 (JP); Tanaka, Orie, Fuchu-cho, Aki-gun,, Hiroshima 730-8670 (JP)
(74) Representative: Müller-Boré & Partner Patentanwälte PartG mbB

(57) **Abstract**

A side door comprises a door panel portion and a reinforcement portion (a rear-side reinforcement portion and others). The reinforcement portion is provided at at least one of a corner portion positioned between a lower portion and a front-side portion of a peripheral part of the door panel portion and another corner portion positioned between the lower portion and a rear-side portion of the peripheral part of the door panel portion such that the reinforcement portion overlaps with a vehicle-body frame member in a vehicle side view. The reinforcement portion is provided with a curved portion at an inside of the corner portion where the reinforcement portion is provided. The curved portion is configured to be curved convexly toward an outside part of the corner portion in the vehicle side view.

## Description

### BACKGROUND OF THE INVENTION

The present invention relates to a vehicle-body structure of a vehicle, and a vehicle.

Conventionally, in a vehicle which comprises a vehicle-body frame member (a center pillar, a side sill, and others) which forms an opening portion for entrance at a vehicle side part and a side door provided so as to open and close the opening portion, a structure of the side door to cope with a vehicle side collision has been developed (see Japanese Patent Laid-Open Publication No. 2018-52138, for example).

The above-described patent document discloses a door (side door) for a vehicle which is provided with panel portions which are arranged on a cabin inward side and on a cabin outward side, a frame portion which is arranged between the panel portions and configured to have a closed-cross section, and a reinforcement portion which is connected to the frame portion. The frame portion of the door for the vehicle comprises front and rear parts which respectively extend in a vertical direction at vehicle front-side and rear-side portions of the panel portions and a lower part which interconnects respective lower portions of the front and rear parts. The reinforcement portion comprises a first reinforcement which interconnects the above-described front and rear parts and a second reinforcement which interconnects the first reinforcement and the above-described lower part.

Herein, a vehicle-body structure of the vehicle is required to suppress a center pillar from coming into a cabin as much as possible in the vehicle side collision. Recently, weight reduction of the vehicle (light-weight vehicle) is also required from viewpoints of the fuel economy and the like. Therefore, it is necessary to compatibly attain the further weight reduction of the vehicle and increasing of the amount of absorption of the collision load (the collision-load absorption performance) in the vehicle side collision. In the door disclosed in the above-described patent document, however, since it is necessary to provide both the frame portion and the reinforcement portion, the weight is so increased that it may be difficult to satisfy the above-described requirements.

### SUMMARY OF THE INVENTION

The present invention has been devised in view of the above-described matter, and an object of the present invention is to compatibly attain the weight reduction of the vehicle and increasing of the amount of absorption of the collision load in the vehicle side collision.

The present invention is a vehicle-body structure of a vehicle, comprising a vehicle-body frame member forming an opening portion for entrance at a vehicle side part, and a side door provided so as to open and/or close the opening portion, wherein the side door comprises a door panel portion and a reinforcement portion, the door panel portion being provided to cover the opening portion and configured such that a peripheral part thereof overlaps with the vehicle-body frame member in a vehicle side view (i.e., when viewed from the vehicle width direction), the reinforcement portion being provided at at least one of a corner portion which is positioned between a lower portion and a front-side portion of the peripheral part of the door panel portion and another corner portion which is positioned between the lower portion and a rear-side portion of the peripheral part of the door panel portion such that the reinforcement portion overlaps with the vehicle-body frame member in the vehicle side view (i.e., when viewed from the vehicle width direction), thereby reinforcing the corner portion against a collision load applied to the side door from a vehicle side (or outside of the vehicle particularly in the vehicle width direction), and the reinforcement portion is provided with a curved portion at an inside of the corner portion where the reinforcement portion is provided, the curved portion being configured to be curved convexly toward an outside part of the corner portion in the vehicle side view (i.e., when viewed from the vehicle width direction). Particularly, the curved portion is at the insidet of the corner portion in a radial direction of the corner portion. Further particularly, the curved portion is configured to be curved convexly toward the outside part of the corner portion in the radial direction of the corner portion.

According to the present invention, the side door closing the opening portion is moved (pushed) toward the cabin and comes to contact the vehicle-body frame member in the vehicle side collision. At this moment, the door panel portion of the side door receives a reaction load from the vehicle-body frame member in addition to the collision load. Since the reinforcement portion is provided at at least one of the corner portion positioned between the lower portion and the front-side portion of the peripheral part of the door panel portion and the corner portion positioned between the lower portion and the rear-side portion of the peripheral part of the door panel portion such that the reinforcement portion overlaps with the vehicle-body frame member in the vehicle side view, the corner portion where the reinforcement portion is provided has high rigidity against the reaction load from the vehicle-body frame member. Accordingly, deformation of the peripheral part of the door panel portion, especially deformation of the corner portion where the reinforcement portion is provided, is suppressed by the reinforcement portion. Thereby, even if the door panel portion receives the collision load and the reaction load from the vehicle-body frame member, it is suppressed that portions of the peripheral part of the door panel portion which are positioned on both sides of the above-described corner portion come into the cabin through the opening portion of the vehicle-body frame member, so that the above-described portions of the peripheral part of the door panel portion remain contacting with the vehicle-body frame member (i.e., a connection state of the above-described portions of the peripheral part of the door panel portion and the vehicle-body frame member is maintained). Thereby, it is also suppressed that the other portion of the above-described portions of the peripheral part of the door panel portion which are positioned on the both sides of the corner portion comes into the cabin in the vehicle side collision. Consequently, the collision load of the vehicle side collision is transmitted from the side door to the vehicle-body frame member, being dispersed to the peripheral part of the door panel portion. Accordingly, the weight reduction of the vehicle and increasing of the amount of absorption of the collision load in the vehicle side collision can be compatibly attained.

Further, the stress concentration which may occur at the inside of the corner portion of the reinforcement portion can be properly reduced by the curved portion of the reinforcement portion. Consequently, the above-described dispersion and transmission of the collision load from the side door to the vehicle-body frame member can be properly attained.

Meanwhile, the above-described reinforcement portion can be made of a plate member, for example. Thereby, it is unnecessary that the plate thickness of an impact bar which is conventionally provided is made thick or this impact bar is made of a frame member having a closed-cross section in order to increase the amount of absorption of the collision load in the vehicle side collision. It is also unnecessary that the number of impact bar is increased or a new impact bar is added. Consequently, any weight increase of the door panel portion, thereby any weight increase of the vehicle can be suppressed.

Accordingly, the weight reduction of the vehicle and increasing of the amount of absorption of the collision load in the vehicle side collision can be compatibly attained.

In an embodiment of the above-described vehicle-body structure of the vehicle according to the present invention, the reinforcement portion is provided at the corner portion of the peripheral part of the door panel portion which corresponds to a connection portion of a side sill and a center pillar which constitute the vehicle-body frame member.

According to this embodiment, since the relatively-large collision load may occur around a portion of the peripheral part of the door panel portion which is configured to be located at, or corresponds to the side sill and the center pillar, especially, in the vehicle side collision, the amount of absorption of the collision load of the vehicle side collision can be effectively increased by reinforcing the corner portion of the peripheral part of the door panel portion which corresponds to the connection portion of the side sill and the center pillar.

Particularly, the corner portion of the peripheral part of the door panel portion where the reinforcement portion is provided comprise a curved wall portion which extends in a vehicle width direction and in a peripheral direction of the peripheral part of the door panel portion and is configured to be curved in the vehicle side view (i.e., when viewed from the vehicle width direction). Further particularly, the curved portion of the reinforcement portion extend along the curved wall portion of the corner portion. Further particularly, the curved portion of the reinforcement portion is fixed to the curved wall portion of the corner portion.

Thereby, the dispersion and transmission of the collision load from the side door to the vehicle-body frame member can be more properly attained.

Further particularly, the side door further comprise an impact bar, which is particularly configured to absorb the collision load. A one-end portion of the impact bar be fixed to the corner portion of the door panel portion where the reinforcement portion is provided.

Thereby, the amount of absorption of the collision load of the vehicle side collision can be more increased.

Further particularly, the reinforcement portion is configured to overlap with the impact bar.

Further particularly, the reinforcement portion is located at the same position, in the longitudinal direction, as a floor cross member.

Further particularly, the side door is a front side door.

Further particularly, the side door is a rear side door.

Further particularly, a vehicle includes the above vehicle-body structure.

The present invention will become apparent from the following description which refers to the accompanying drawings.

### BRIEF DESCRIPTION OF THE DRAWINGS

FIG. **1** is a side view showing a left-side side part of a vehicle provided with a vehicle-body structure of the vehicle according to an embodiment of the present invention, which shows around a front side door.
FIG. **2** is a side view showing a vehicle-body frame member at the left-side side part of the vehicle.
FIG. **3** is a side view showing a state where an outer panel of the front side door is removed, when viewed from a vehicle left side, which shows a lower part below a beltline.
FIG. **4** is a sectional view taken along line IV-IV of FIG. **3****.**
FIG. **5** is a sectional view taken along line V-V of FIG. **3****.**
FIG. **6** is a sectional view taken along line VI-VI of FIG. **3****.**
FIG. **7** is a sectional view taken along line VII-VII of FIG. **1****.**
FIG. **8** is a sectional view taken along line VIII-VIII of FIG. **3****.**
FIG. **9** is a perspective view showing a corner portion of a peripheral part of a door panel portion (door inner panel) of the front side door which corresponds to a connection portion of a side sill and a center pillar, which viewed from an upper-front outward side, in a vehicle width direction, of the vehicle.
FIG. **10** is a sectional view of a central portion, in a vertical direction, of the front side door in an example of a vehicle side collision, which shows a state where a collision object contacts the front side door.
FIG. **11** is a sectional view showing a state where the collision object comes into a cabin from the state shown in FIG. **10****,** which corresponds to FIG. **10****.**
FIG. **12** is a sectional view taken along line XII-XII of FIG. **11****.**
FIG. **13** is a sectional view showing a state where the collision object further comes into the cabin from the state shown in FIG. **11****,** which corresponds to FIG. **10****.**
FIG. **14** is a sectional view taken along line XIV-XIV of FIG. **13****.**

### DETAILED DESCRIPTION OF THE INVENTION

Hereafter, an embodiment of the present invention will be described referring to the drawings. In the following description, front, rear, left, right, upper and lower which respectively mean directions relative to a vehicle **1** will be simply referred to as "front," "rear," "left," "right," "upper," and "lower."

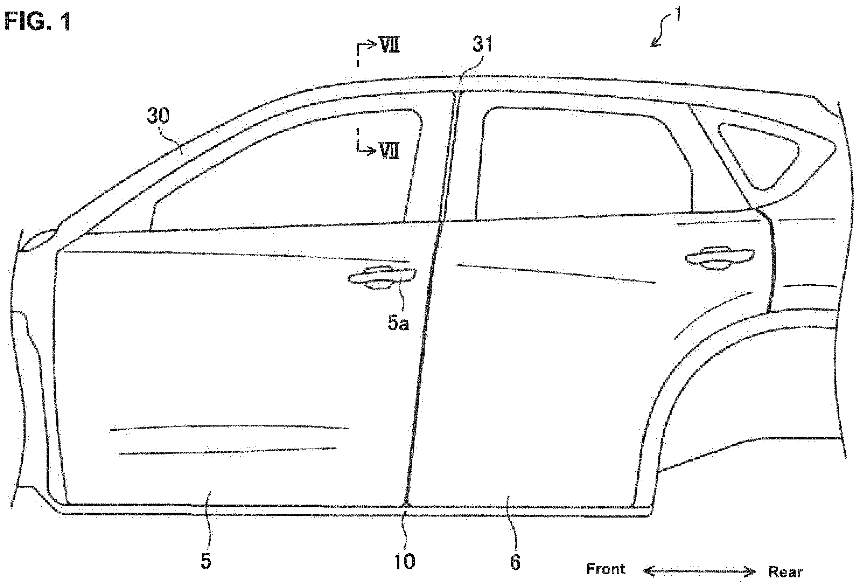

FIG. **1** shows a left-side side part of the vehicle **1** to which a vehicle-body structure according to the present embodiment is applied. The vehicle **1** is particularly a 4-door type of passenger car. In the present embodiment, since the vehicle-body structure of the vehicle **1** is configured to be laterally symmetrical, the vehicle-body structure of the left-side part of the vehicle **1** will be described specifically only, and detailed explanation of the one of a right-side part of the vehicle **1** will be omitted. Further, in the following description, there is a case where an inward side, in a vehicle width direction, of the vehicle **1** will be simply referred to as "right side" and also an outward side, in the vehicle width direction, of the vehicle **1** will be simply referred to as "left side."

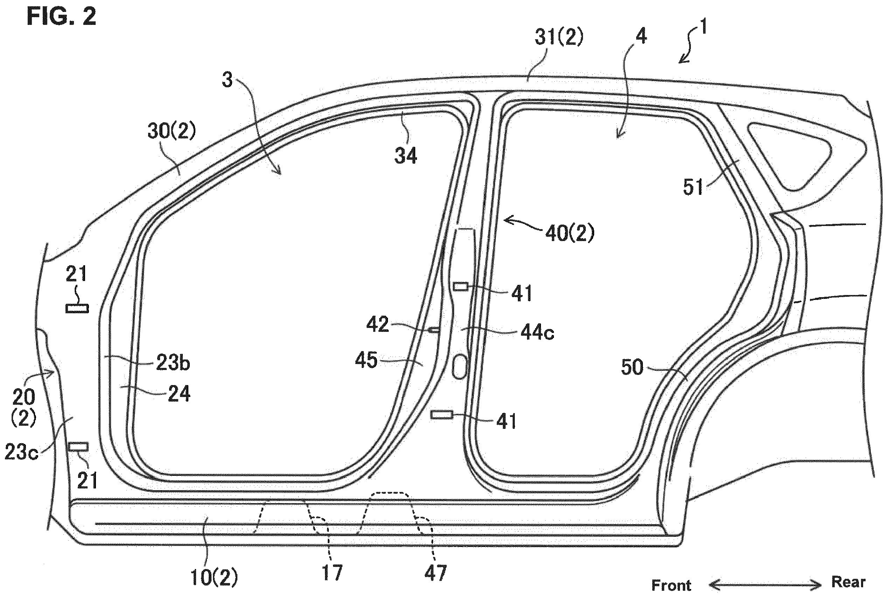

The vehicle **1** comprises, as shown in FIGS. **1** and **2****,** a vehicle-body frame member **2** which forms front-side and rear-side opening portions for entrance **3, 4** at its left-side side part, through which a passenger gets on or gets off. A front side door **5** is arranged at the front-side opening portion **3** so as to open and close this opening portion **3.** A rear side door **6** is arranged at the rear-side opening portion **4** so as to open and close this opening portion **4.**

The vehicle-body frame member **2** particularly comprises, as shown in FIG. **2****,** a side sill **10** which is arranged at a lower part of the vehicle **1** and extends in a longitudinal direction, a hinge pillar **20** which extends upwardly from a front-side end portion of the side sill **10,** a front pillar **30** which extends obliquely rearwardly-and-upwardly from an upper-side end portion of the hinge pillar **20,** and a roof side rail **31** which continuously extends rearwardly from a rear-side end portion of the front pillar **30.** The vehicle-body frame member **2** further comprises a center pillar **40** which extends in a vertical direction and interconnects a central part, in the longitudinal direction, of the side sill **10** and a central part, in the longitudinal direction, of the roof side rail **31.** The front-side opening portion **3** is partitioned by the side sill **10,** the hinge pillar **20,** the front pillar **30,** the roof side rail **31,** and the center pillar **40.**

Further, the vehicle-body frame member **2** particularly comprises a wheel arch **50** which extends upwardly-and-rearwardly in an arch shape from a rear-side end portion of the side sill **10** and forms a part of a wheel house and a quarter pillar **51** which extends vertically and interconnects the wheel arch **50** and the roof side rail **31.** The rear-side opening portion **4** is partitioned by the side sill **10,** the roof side rail **31,** the center pillar **40,** the wheel arch **50,** and the quarter pillar **51.**

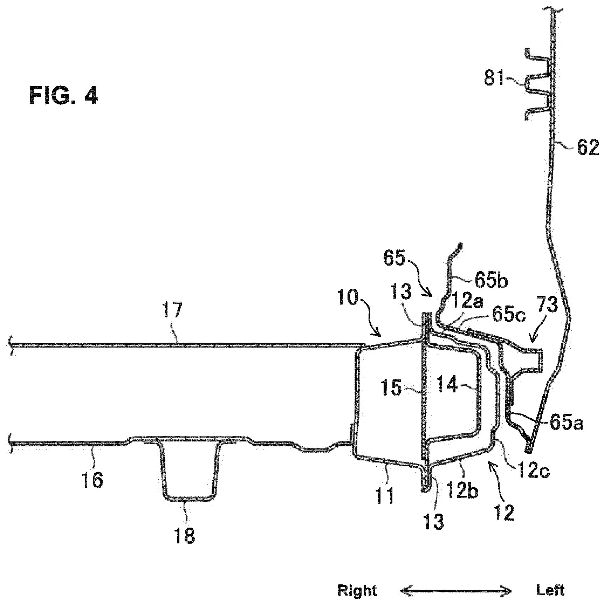

The side sill **10** particularly comprises, as shown in FIG. **4****,** a side-sill inner panel **11** which is positioned on the inward side, in the vehicle width direction, of the vehicle **1** (on the right side in this figure) and has a hat-shaped cross section and a side-sill outer panel **12** which is positioned on the outward side, in the vehicle width direction, of the vehicle **1** (on the left side in this figure) and has a hat-shaped cross section. The cross section of the side-sill inner panel **11** is opened to the left side, and the cross section of the side-sill outer panel **12** is opened to the right side. Each of the side-sill inner panel **11** and the side-sill outer panel **12** has side-sill flanges **13** which extend in the vertical direction and in the longitudinal direction at its upper-side end portion and its lower-side end portion. The respective side-sill flanges **13** overlap with each other in the vehicle width direction and are welded together. Thus, a closed-cross section is formed by the side-sill inner panel **11** and the side-sill outer panel **12.**

The side-sill outer panel **12** particularly comprises, as shown in FIG. **4****,** a side-sill upper wall portion **12a** which extends toward the left side from a lower-side end portion of the upper-side side-sill flange **13,** a side-sill lower wall portion **12b** which extends, facing the side-sill upper wall portion **12a** in the vertical direction, and a side-sill side wall portion **12c** which interconnects a left-side end portion of the side-sill upper wall portion **12a** and a left-side end portion of the side-sill lower wall portion **12b** in the vertical direction.

A first side-sill reinforcement **14** and a second side-sill reinforcement **15** are particularly provided inside the side sill **10.** The first side-sill reinforcement **14** is configured to have a hat-shaped cross section which is opened to the right side, and arranged along the side-sill outer panel **12.** The second side-sill reinforcement **15** is of a flat plate shape. Respective end portion, in the vertical direction, of the first side-sill reinforcement **14** overlap with the respective side-sill flanges **13** in the vehicle width direction and are welded together with the side-sill flanges **13.**

As shown in FIG. **4****,** a left-side end portion of a floor panel **16** which expands in the longitudinal direction and in the vehicle width direction is joined to a lower-side portion of the side-sill inner panel **11.** Further, a left-side end portion of a first floor cross member **17** which extends in the vehicle width direction is joined to an upper-side portion of the side-sill inner panel **11.** A floor side rail **18** which extends in the longitudinal direction is joined to a lower face of the floor panel **16.** The first floor cross member **17** is a vehicle-body frame member which extends in the vehicle width direction.

The hinge pillar **20** comprises one or more, particularly two front-door hinges **21** to support the front side door **5** (see FIG. **2**). The two front-door hinges **21** are provided to be spaced apart from each other in the vertical direction.

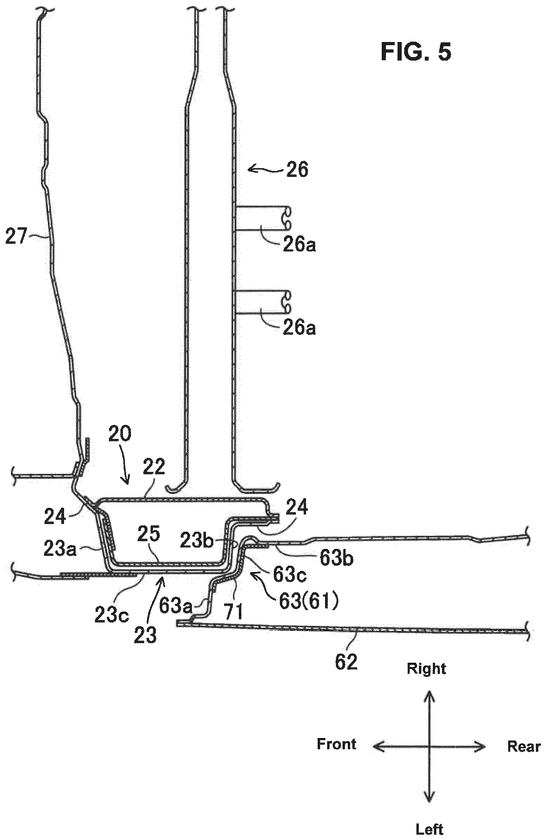

The hinge pillar **20** particularly comprises, as shown in FIG. **5****,** a hinge-pillar inner panel **22** which is positioned on the inward side, in the vehicle width direction, of the vehicle **1** (on the right side in this figure) and has a hat-shaped cross section and a hinge-pillar outer panel **23** which is positioned on the outward side, in the vehicle width direction, of the vehicle **1** (on the left side in this figure) and has a hat-shaped cross section. The cross section of the hinge-pillar inner panel **22** is opened to the left side, and the cross section of the hinge-pillar outer panel **23** is opened to the right side. Each of the hinge-pillar inner panel **22** and the hinge-pillar outer panel **23** has hinge-pillar flanges **24** which extend in the vertical direction and in the longitudinal direction at its front-side end portion and its rear-side end portion. The respective hinge-pillar flanges **24** overlap with each other in the vehicle width direction and are welded together. Thus, a closed-cross section is formed by the hinge-pillar inner panel **22** and the hinge-pillar outer panel **23.**

The hinge-pillar outer panel **23** particularly comprises, as shown in FIG. **5****,** a hinge-pillar front wall portion **23a** which extends toward the left side from a rear-side end portion of the upper-side hinge-pillar flange **24,** a hinge-pillar rear wall portion **23b** which extends, facing the hinge-pillar front wall portion **23a** in the longitudinal direction, and a hinge-pillar side wall portion **23c** which interconnects a left-side end portion of the hinge-pillar front wall portion **23a** and a left-side end portion of the hinge-pillar rear wall portion **23b** in the longitudinal direction.

A hinge-pillar reinforcement **25** is particularly provided inside the hinge pillar **20.** The hinge-pillar reinforcement **25** is configured to have a hat-shaped cross section which is opened to the right side, and arranged along the hinge-pillar outer panel **23.** Respective end portions, in the longitudinal direction, of the hinge-pillar reinforcement **25** overlap with the respective hinge-pillar flanges **24** in the vehicle width direction and are welded together with the hinge-pillar flanges **24.**

As shown in FIG. **5****,** a left-side end portion of an instrument-panel member **26** extending in the vehicle width direction is particularly joined to an upper part of the hinge-pillar inner panel **22.** The instrument-panel member **26** is provided with hinges **26a** to pivotably support a glove box in the vertical direction and others. A dash panel **27** which partitions a cabin from an engine room is joined to a front-side end portion of the hinge-pillar inner panel **22.** The instrument panel member **26** is a frame member which extends in the vehicle width direction.

As shown in FIG. **2****,** the center pillar **40** is provided with one or more, particularly two rear-door hinges **41** to support the openable rear side door **6.** The two rear-door hinges **41** are provided to be spaced apart from each other in the vertical direction. The center pillar **40** is further provided with a striker **42** at its front-side position which is located slightly below the upper-side rear-door hinge **41.** The striker **42** is a member to lock the front side door **5** in a closed state.

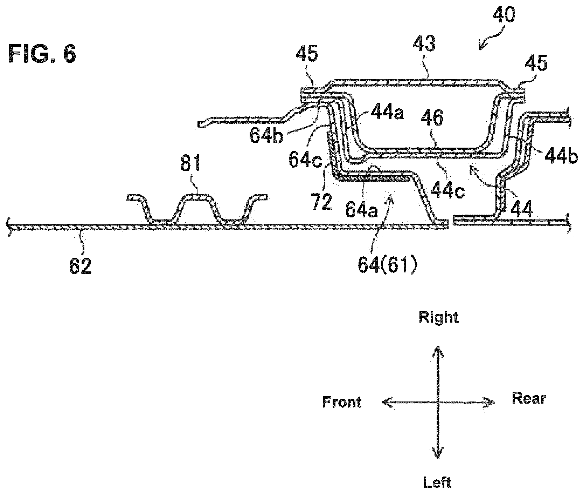

The center pillar **40** particularly comprises, as shown in FIG. **6****,** a center-pillar inner panel **43** which is positioned on the inward side, in the vehicle width direction, of the vehicle **1** (on the right side in this figure) and has a hat-shaped cross section and a center-pillar outer panel **44** which is positioned on the outward side, in the vehicle width direction, of the vehicle **1** (on the left side in this figure) and has a hat-shaped cross section. The cross section of the center-pillar inner panel **43** is opened to the left side, and the cross section of the center-pillar outer panel **44** is opened to the right side. Each of the center-pillar inner panel **43** and the center-pillar outer panel **44** has center-pillar flanges **45** which extend in the vertical direction and in the longitudinal direction at its front-side end portion and its rear-side end portion. The respective center-pillar flanges **45** overlap with each other in the vehicle width direction and are welded together. Thus, a closed-cross section is formed by the center-pillar inner panel **43** and the center-pillar outer panel **44.**

The center-pillar outer panel **44** particularly comprises, as shown in FIG. **6****,** a center-pillar front wall portion **44a** which extends toward the left side from a rear-side end portion of the front-side center-pillar flange **45,** a center-pillar rear wall portion **44b** which extends, facing the center-pillar front wall portion **44a** in the longitudinal direction, and a center-pillar side wall portion **44c** which interconnects a left-side end portion of the center-pillar front wall portion **44a** and a left-side end portion of the center-pillar rear wall portion **44b** in the longitudinal direction.

A center-pillar reinforcement **46** is provided inside the center pillar **40.** The center-pillar reinforcement **46** is configured to have a hat-shaped cross section which is opened to the right side, and arranged along the center-pillar outer panel **44.** Respective end portion, in the longitudinal direction, of the center-pillar reinforcement **46** overlap with the respective center-pillar flanges **45** in the vehicle width direction and are welded together with the center-pillar flanges **45.**

As shown in FIG. **2****,** a lower-side end portion of the center pillar **40** is located substantially at the same position as a second floor cross member **47.** The second floor cross member **47** is another vehicle-body frame member which extends in the vehicle width direction.

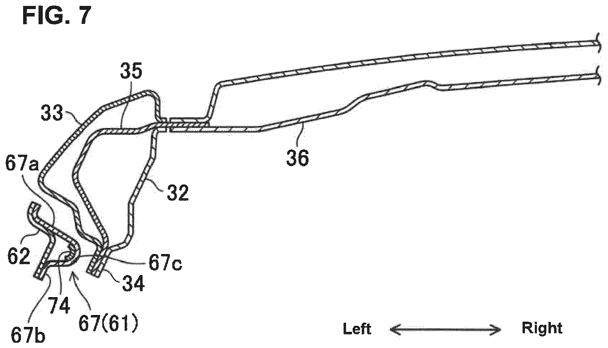

The roof side rail **31** particularly comprises, as shown in FIG. **7****,** a roof-side inner panel **32** which is positioned on the inward side, in the vehicle width direction, of the vehicle **1** (on the right side in this figure) and a roof-side outer panel **33** which is positioned on the outward side, in the vehicle width direction, of the vehicle **1** (on the left side in this figure) and has a C-shaped cross section. The cross section of the roof-side outer panel **33** is opened to the right side. The roof-side outer panel **33** has a roof-side flange **34** which extends in the vertical direction and in the longitudinal direction at its lower-side end portion. The roof-side flange **34** overlaps with a lower-side end portion of the roof-side inner panel **32** in the vehicle width direction and these are welded together. An upper-side end portion of the roof-side outer panel **33** overlaps with an upper-side end portion of the roof-side inner panel **32** in the vehicle width direction and these are welded together. Thus, a closed-cross section is formed by the roof-side inner panel **32** and the roof-side outer panel **33.**

A roof-side reinforcement **35** is particularly provided inside the roof side rail **31.** The roof-side reinforcement **35** is configured to have a hat-shaped cross section which is opened to the right side, and arranged along the roof-side outer panel **33.** A lower-side end portion of the roof-side reinforcement **35** overlaps with a lower-side end portion of the roof-side inner panel **32** and the roof-side flange **34** of the roof-side outer panel **33** in the vehicle width direction and these are welded together. Meanwhile, an upper-side end portion of the roof-side reinforcement **35** overlaps with an upper-side end portion of the roof-side inner panel **32** and an upper-side end portion of the roof-side outer panel **33** in the vehicle width direction and these are welded together.

As shown in FIG. **7****,** a roof cross member **36** which extends in the vehicle width direction is particularly provided on the right side of the roof side rail **31.** A left-side end portion of the roof cross member **36** is joined to the roof side rail **31.** The roof cross member **36** is another frame member which extends in the vehicle width direction.

Herein, a structure of a cross section of the front pillar **30** is similar to that of a cross section of the roof side rail **31** which is continuous to the front pillar **30.**

Next, the front side door **5** will be described as an example of a side-door structure. In the following description, a state where the front side door **5** closes the front-side opening portion **3** is a premise. Herein, while detailed description of the rear side door **6** is omitted, the rear side door **6** has substantially the same structure as the front side door **5** except a shape of its door panel portion **60** and arrangement and a shape of its reinforcement portions, which will be described later.

The front side door **5** comprises, as shown in FIGS. **4** - **8**, the door panel portion **60** which has a door inner panel **61** which is positioned on the inward side, in the vehicle width direction, of the vehicle (on the right side in this figure) and a door outer panel **62** which is positioned on the outward side, in the vehicle width direction, of the vehicle (on the left side in this figure). The door inner panel **61** and the door outer panel **62** are welded together so as to have a closed-cross section formed thereby. A door trim, which is not illustrated, is joined to a face of the door inner panel **61** which is opposite to the door outer panel **62.** The door panel portion **60** (the door inner panel **61** and the door outer panel **62**) closes the front-side opening portion **3,** and the peripheral part of the door panel portion **60** covering the front-side opening potion **3** overlaps with the vehicle-body frame member **2** in a vehicle side view (i.e., when viewed from the vehicle width direction).

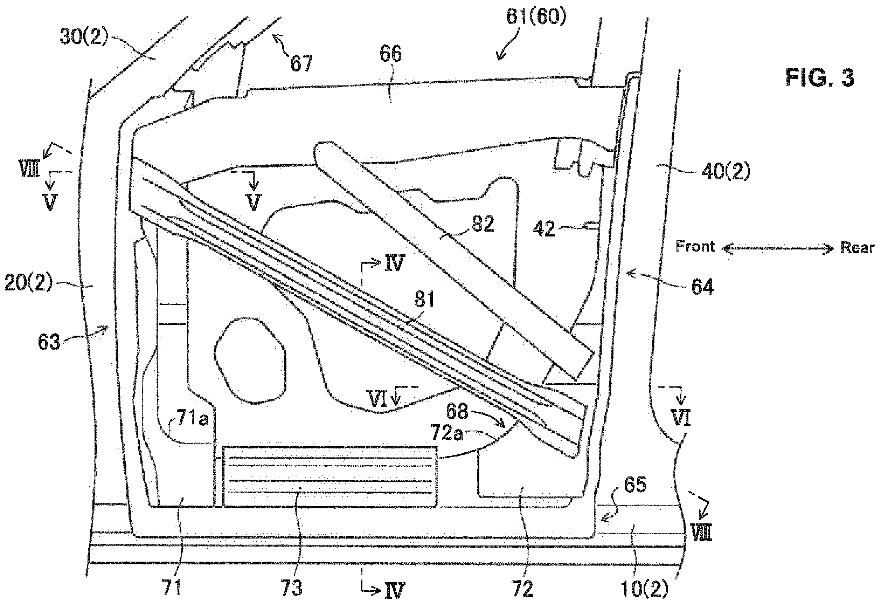

The door inner panel **61** is particularly made of a single-sheet steel plate. The door inner panel **61** is configured such that its peripheral part is positioned along a periphery of the front-side opening portion **3** (the vehicle-body frame member **2**) as shown in FIG. **3****.** The door inner panel **61** particularly comprises at least any one of an inner front portion **63** (front-side portion) which extends in the vertical direction along the hinge pillar **20,** an inner rear portion **64** (rear-side portion) which extends in the vertical direction along a lower part of the center pillar **40,** and an inner lower portion **65** which extends along the side sill **10** and interconnects a lower-side end portion of the inner front portion **63** and a lower-side end portion of the inner rear portion **64.** The door inner panel **61** further comprises a beltline portion **66** which extends straightly in the longitudinal direction and interconnects an upper-side end portion of the inner front portion **63** and an upper-side end portion of the inner rear portion **64.** The door inner panel **61** further comprises a window frame portion **67** which forms a quarter-window opening portion which is closed with a window glass together with the beltline portion **66.**

In the vehicle side view (i.e., when viewed from the vehicle width direction), the inner front portion **63** overlaps with the hinge pillar **20,** the inner rear portion **64** overlaps with the center pillar **40,** the inner lower portion **65** overlaps with the side sill **10,** and the window frame portion **67** overlaps with the front pillar **30** and the roof side rail **31.**

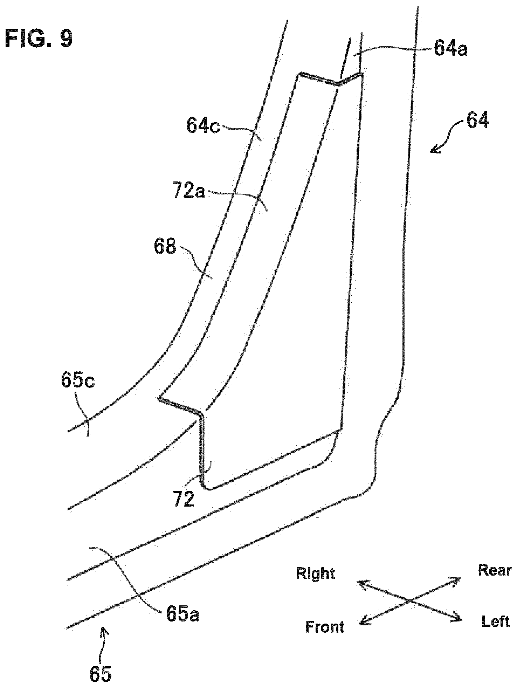

The door inner panel **61** is particularly provided with a rear-lower curved wall portion **68** which is provided at an inside part (or an inside), particularly in a radial direction, of a corner portion which is positioned between the inner rear portion **64** and the inner lower portion **65** (i.e., a corner portion which is formed at a peripheral portion of the door inner panel **61** and corresponds to a connection portion of the side sill **10** and the center pillar **40**). This rear-lower curved wall portion **68** is configured to be smoothly curved from the inner rear portion **64** toward the inner lower portion **65** in the vehicle side view (i.e., when viewed from the vehicle width direction) (see FIGS. **3** and **9**). That is, the rear-lower curved wall portion **68** is curved forwardly and downwardly in the vehicle side view. Thus, the rear-lower curved wall portion **68** is curved convexly toward an outside part, particularly in the radial direction, of the corner portion positioned between the inner rear portion **64** and the inner lower portion **65** in the vehicle side view. The rear-lower curved wall portion **68** extends in the vehicle width direction and in a peripheral direction of the peripheral portion of the door inner panel **61.**

Further, similarly to the above-described rear-lower curved wall portion **68,** a front-lower curved wall portion (not illustrated) is particularly provided at an inside part (of an inside), in a radial direction, of a corner portion of the door inner panel **61** which is positioned between the inner front portion **63** and the inner lower portion **65** (i.e., a corner portion which is formed at the peripheral portion of the door inner panel **61** and is located at or corresponds to a connection portion of the side sill **10** and the hinge pillar **20**). This front-lower curved wall portion is configured to be curved convexly toward an outside part, particularly in the radial direction, of the corner portion positioned between the inner front portion **63** and the inner lower portion **65** in the vehicle side view. This front-lower curved wall portion extends in the vehicle width direction and in the peripheral direction of the peripheral portion of the door inner panel **61** as well.

The inner front portion **63** particularly comprises, as shown in FIG. **5****,** a front-side outer wall portion **63a** which is positioned at the outside, in a surface direction, of the door inner panel **61** (on the front side in this figure), a front-side inner wall portion **63b** which is positioned on the inside, in the surface direction, (on the rear side in this figure) of the front-side outer wall portion **63a,** and a front-side connection wall portion **63c** which interconnects the front-side outer wall portion **63a** and the front-side inner wall portion **63b** in the vehicle width direction. Herein, the surface direction of the door inner panel **61** (the surface direction of the door panel portion **60**) matches a surface direction of the front-side opening portion **3.**

The front-side outer wall portion **63a** comprises a part which expands in the longitudinal direction and in the vertical direction (which extends substantially along the surface direction of the front-side opening portion **3**) and another part which expands (extends) in the vehicle width direction and in the vertical direction continuously from a front-side end portion of the above-described part. The front-side inner wall portion **63b** expands in the longitudinal direction and in the vertical direction. The front-side connection wall portion **63c** expands in the vehicle width direction and in the vertical direction (extends in the vehicle width direction and in the peripheral direction of the peripheral portion of the door inner panel **61**) so as to interconnect a rear-side end portion of the front-side outer wall portion **63a** and a front-side end portion of the front-side inner wall portion **63b.** The front-side connection wall portion **63c** forms a ridgeline between the front-side outer wall portion **63a** and the front-side connection wall portion **63c.** The front-side outer wall portion **63a** extends in the vertical direction such that this portion **63a** overlaps with the rear-side hinge-pillar flange **24** and the hinge-pillar side wall portion **23c** of the hinge pillar **20** in the vehicle side view (i.e., when viewed from the vehicle width direction). The front-side inner wall portion **63b** extends in the vertical direction such that this portion **63b** overlaps with the rear-side hinge-pillar flange **24** of the hinge pillar **20** in the vehicle side view (i.e., when viewed from the vehicle width direction).

The inner rear portion **64** comprises, as shown in FIG. **6****,** a rear-side outer wall portion **64a** which is positioned at the outside, in the surface direction, of the door inner panel **61** (on the rear side in this figure), a rear-side inner wall portion **64b** which is positioned on the inside, in the surface direction, (on the front side in this figure) of the rear-side outer wall portion **64a,** and a rear-side connection wall portion **64c** which interconnects the rear-side outer wall portion **64a** and the rear-side inner wall portion **64b** in the vehicle width direction.

The rear-side outer wall portion **64a** comprises a part which expands in the longitudinal direction and in the vertical direction (which extends substantially along the surface direction of the front-side opening portion **3**) and another part which expands (extends) in the vehicle width direction and in the vertical direction continuously from a rear-side end portion of the above-described part. The rear-side inner wall portion **64b** extends or expands in the longitudinal direction and in the vertical direction. The rear-side connection wall portion **64c** expands in the vehicle width direction and in the vertical direction (extends in the vehicle width direction and in the peripheral direction of the peripheral portion of the door inner panel **61**) so as to interconnect a front-side end portion of the rear-side outer wall portion **64a** and a rear-side end portion of the rear-side inner wall portion **64b**. A ridgeline is formed between the rear-side connection wall portion **64c** and the rear-side outer wall portion **64a.** The rear-side outer wall portion **64a** extends in the vertical direction such that this portion **64a** overlaps with the front-side center-pillar flange **45** and the center-pillar side wall portion **44c** of the center pillar **40** in the vehicle side view (i.e., when viewed from the vehicle width direction). The rear-side inner wall portion **64b** extends in the vertical direction such that this portion **64b** overlaps with the front-side center-pillar flange **45** of the center pillar **40** in the vehicle side view (i.e., when viewed from the vehicle width direction).

An opening portion for exposing the striker **42** to a door inside (to a space between the door inner panel **61** and the door outer panel **62**) is provided at a part of the door-inner rear portion **64** which corresponds to the striker **42.** A door latch is provided at a position of this opening portion of the inner rear portion **64,** which is not illustrated. An engagement state of this door latch with the striker **42** is controlled by operating a door handle **5a** (see FIG. 1).

The inner lower portion **65** comprises, as shown in FIG. **4****,** a lower-side outer wall portion **65a** which is positioned at the outside, in the surface direction, of the door inner panel **61** (on the lower side in this figure), a lower-side inner wall portion **65b** which is positioned on the inside, in the surface direction, (on the upper side in this figure) of the lower-side outer wall portion **65a,** and a lower-side connection wall portion **65c** which interconnects the lower-side outer wall portion **65a** and the lower-side inner wall portion **65b** in the vehicle width direction.

The lower-side outer wall portion **65a** and the lower-side inner wall portion **65b** extend or expand in the longitudinal direction and in the vertical direction (which extends substantially along the surface direction of the front-side opening portion **3**). The lower-side connection wall portion **65c** extends or expands in the vehicle width direction and in the longitudinal direction (extends in the vehicle width direction and in the peripheral direction of the peripheral portion of the door inner panel **61**) so as to interconnect an upper-side end portion of the lower-side outer wall portion **65a** and a lower-side end portion of the lower-side inner wall portion **65b**. A ridgeline is formed between the lower-side connection wall portion **65c** and the lower-side outer wall portion **65a.** The lower-side outer wall portion **65a** extends in the longitudinal direction such that this portion **65a** overlaps with the upper-side side-sill flange **13** and the side-sill side wall portion **12c** of the side sill **10** in the vehicle side view (i.e., when viewed from the vehicle width direction). The lower-side inner wall portion **65b** extends in the longitudinal direction such that this portion **65b** overlaps with the upper-side side-sill flange **13** of the side sill **10** in the vehicle side view (i.e., when viewed from the vehicle width direction).

The rear-side connection wall portion **64c** and the lower-side connection wall portion **65c** are smoothly connected by the rear-lower curved wall portion **68,** and the front-side connection wall portion **63c** and the lower-side connection wall portion **65c** are smoothly connected by the above-described front-lower curved wall portion provided at the inside part of the corner portion positioned between the inner front portion **63** and the inner lower portion **65.**

The window frame portion **67** comprises, as shown in FIG. **7****,** an upper-side outer wall portion **67a** which is positioned at the outside, in the surface direction, of the door inner panel **61** (on the upper side in this figure), an upper-side inner wall portion **67b** which is positioned on the inside, in the surface direction, of the door inner panel **61** (on the lower side in this figure) relative to the upper-side outer wall portion **67a,** and an upper-side connection wall portion **67c** which interconnects the upper-side outer wall portion **67a** and the upper-side inner wall portion **67b** in the vertical direction and in the vehicle width direction. The upper-side outer wall portion **67a** extends or expands in the longitudinal direction and in the vehicle width direction and slants downwardly toward the right side. The upper-side inner wall portion **67b** expands in the longitudinal direction and in the vertical direction. The lower-side connection wall portion **65c** is curved downwardly toward the left side from a right-side end portion of the upper-side outer wall portion **67a** so as to interconnect a right-side end portion of the upper-side outer wall portion **67a** and an upper-side end portion of the upper-side inner wall portion **67b.** The upper-side outer wall portion **67a** and the upper-side connection portion **67c** extend such that they overlap with the roof-side flange **34** in the vehicle sideview (i.e., when viewed from the vehicle width direction).

As shown in FIG. **3****,** a first impact bar **81** which is made of a plate member and a second impact bar **82** are attached to the door inner panel **61.** The first impact bar **81** extends obliquely rearwardly-and-downwardly and interconnects an upper-side end portion of the inner front portion **63** and a lower-side end portion of the inner rear portion **64.** The second impact bar **82** extends obliquely rearwardly-and-downwardly so as to interconnect a middle part, in the longitudinal direction, of the beltline portion **66** and a middle part, in the vertical direction, of the inner rear portion **64.** The first impact bar **81** is configured such that both-side end portions, in the longitudinal direction, thereof have a hat-shaped cross section and a middle portion, in the longitudinal direction, thereof has an M-shaped cross section as shown in FIGS. **4** and **6****.**

As shown in FIGS. **3** - **8**, plural reinforcement portions are provided at the peripheral portion of the door inner panel **61,** wherein the peripheral portion of the door inner panel **61** is reinforced by the reinforcement portions against a collision load which is inputted (applied) to the front side door **5** from an outward side, in the vehicle width direction, of the front side door **5.** Specifically, the reinforcement portions include a front-side reinforcement portion **71** which is provided along the inner front portion **63,** a rear-side reinforcement portion **72** which is provided along the inner rear portion **64,** a lower-side reinforcement portion **73** which is provided along the inner lower portion **65,** and an upper-side reinforcement portion **74** which is provided at the window frame portion **67.** The reinforcement portions **71 - 74** may be made of a plate member, which is made from hot material, for example.

The front-side reinforcement portion **71** is, as shown in FIG. **3****,** a patch member which is attached along the front-side outer wall portion **63a,** the front-side inner wall portion **63b,** the front-side connection wall portion **63c,** the above-descried front-lower curved wall portion at the corner portion positioned between the inner front portion **63** and the inner lower portion **65,** a corner portion positioned between the front-side outer wall portion **63a** and the lower-side outer wall portion **65a,** and a corner portion positioned between the front-side inner wall portion **63b** and the lower-side inner wall portion **65b.** That is, the front-side reinforcement portion **71** is provided to extend beyond or straddle a ridgeline between the front-side outer wall portion **63a** and the front-side connection wall portion **63c,** the above-described front-lower curved portion, and a ridgeline between the front-side outer wall portion **63a** and the lower-side outer wall portion **65a,** whereby the inner front portion **63** (particularly, the front-side connection wall portion **63c**) and the corner portion positioned between the inner front portion **63** and the inner lower portion **65** (particularly, the above-described front-lower curved wall portion) are reinforced against the collision load.

The front-side reinforcement portion **71** is, as shown in FIG. **5****,** provided to overlap with the hinge-pillar side wall portion **23c** of the hinge pillar **20** in the vehicle side view (i.e., when viewed from the vehicle width direction). Further, the front-side reinforcement portion **71** is provided substantially over an entire part of the inner front portion **63,** including a portion of the peripheral portion of the door inner panel **61** (an upper part of the inner front portion **63**) which corresponds to the instrument-panel member **26.** That is, the front-side reinforcement portion **71** is provided at the peripheral portion of the door inner panel **61** so as to overlap with the instrument-panel member **26** in the vehicle side view (i.e., when viewed from the vehicle width direction).

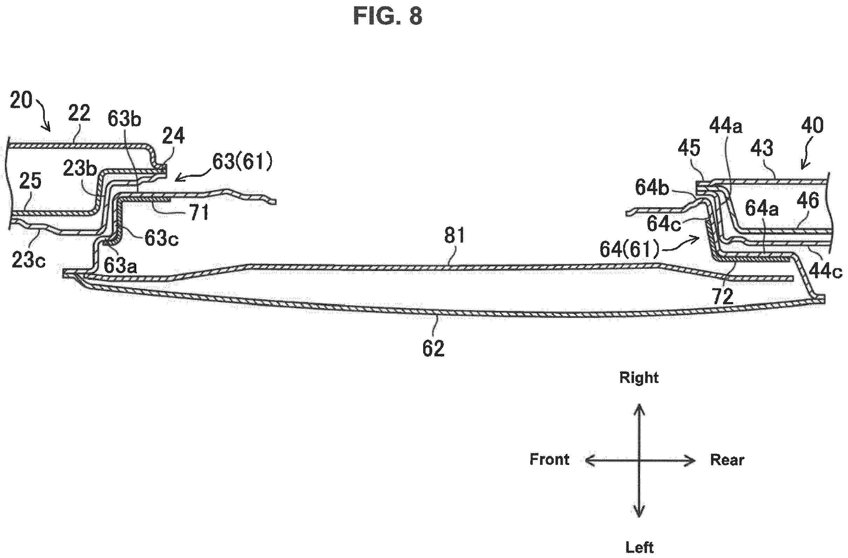

The front-side reinforcement portion **71** is provided to overlap with an upper-side end portion of the first impact bar **81** in the vehicle side view (i.e., when viewed from the vehicle width direction) as shown in FIGS. **3** and **8****.** The front-side reinforcement portion **71** is welded to the inner front portion **63** in a state where this portion **71** overlaps with the first impact bar **81** and the inner front portion **63** (specifically, the front-side outer wall portion **63a**) at a joint position of the first impact bar **81** to the door inner panel **61,** which is not illustrated.

As shown in FIG. **3****,** the front-side reinforcement portion **71** is provided with a front-side curved portion **71a** at an inside part (or an inside), particularly in a radial direction, of the corner portion positioned between the inner front portion **63** and the inner lower portion **65** where the front-side reinforcement portion **71** is provided. This front-side curved portion **71a** is configured to be curved convexly toward an outside part, particularly in the radial direction, of the above-described corner portion in the vehicle side view. The front-side curved portion **71a** extends along the above-described front-lower curved wall portion and is fixed to this front-lower curved wall portion. That is, the front-side curved portion **71a** extends in the vehicle width direction and in the peripheral direction of the peripheral portion of the door inner panel **61** as well as the above-described front-lower curved wall portion. The front-side curved portion **71a** is continuous to a portion of the front-side reinforcement portion **71** which is attached and fixed to the front-side connection wall portion **63c.**

The rear-side reinforcement portion **72** is a patch member which is attached along the rear-side outer wall portion **64a,** the rear-side connection wall portion **64c,** the rear-lower curved wall portion **68,** and a corner portion positioned between the rear-side outer wall portion **64a** and the lower-side outer wall **65a** as shown in FIGS. **3****,** **6** and **9****.** That is, the rear-side reinforcement portion **72** is provided to extend beyond or straddle a ridgeline between the rear-side outer wall portion **64a** and the rear-side connection wall portion **64c** and a ridgeline between the rear-lower curved wall portion **68** and the above-described corner portion, whereby the inner rear portion **64** (particularly, the rear-side connection wall portion **64c**) and the corner portion positioned between the inner rear portion **64** and the inner lower portion **65** (particularly, the rear-lower curved wall portion **68**) are reinforced against the above-described collision load.

The rear-side reinforcement portion **72** is, as shown in FIG. **6****,** provided to overlap with the front-side center-pillar flange **45** and the center-pillar-side wall portion **44c** of the center pillar **40** in the vehicle side view (i.e., when viewed from the vehicle width direction). The rear-side reinforcement portion **72** is provided at a lower-side part of the inner rear portion **64** and the corner portion positioned between the inner rear portion **64** and the inner lower **65** of the peripheral portion of the door inner panel **61.** A portion of the rear-side reinforcement portion **72** which is located at or corresponds to the above-described corner portion (a front-side lower portion of the rear-side reinforcement portion **72**) is provided at a portion of the peripheral portion of the door inner panel **61** which is located at or corresponds to the second floor cross member **47.** That is, the front-side lower portion of the rear-side reinforcement portion **72** is located substantially at the same position, in the longitudinal direction, as the second floor cross member **47.**

The rear-side reinforcement portion **72** is, as shown in FIGS. **3** and **8****,** provided to overlap with a lower-side end portion of the first impact bar **81** in the vehicle side view (i.e., when viewed from the vehicle width direction). The lower-side end portion of the first impact bar **81** is fixed to the corner portion positioned between the inner rear portion **64** and the inner lower portion **65** (i.e., the corner portion which is formed at the peripheral portion of the door inner panel **61** and is located at or corresponds to a connection portion of the side sill **10** and the center pillar **40**). The rear-side reinforcement portion **72** is welded to the inner rear portion **64** in a state where this portion **72** overlaps with the first impact bar **81** and the inner rear portion **64** (specifically, the rear-side outer wall portion **64a**) at a joint position of the first impact bar **81** to the door inner panel **61,** which is not illustrated.

As shown in FIG. **9****,** the rear-side reinforcement portion **72** is provided with a rear-side curved portion **72a** at an inside part (or an inside), particularly in a radial direction, of the corner portion positioned between the inner rear portion **64** and the inner lower portion **65** where the rear-side reinforcement portion **72** is provided. This rear-side curved portion **72a** is configured to be curved convexly toward an outside part, particularly in the radial direction, of the above-described corner portion in the vehicle side view (i.e., when viewed from the vehicle width direction). The rear-side curved portion **72a** extends along the above-described rear-lower curved wall portion **68** and is fixed to this rear-lower curved wall portion **68.** That is, the rear-side curved portion **72a** extends in the vehicle width direction and in the peripheral direction of the peripheral portion of the door inner panel **61** as well as the rear-lower curved wall portion **68.** The rear-side curved portion **72a** is continuous to a portion of the rear-side reinforcement portion **72** which is attached and fixed to the rear-side connection wall portion **64c.**

The lower-side reinforcement portion **73** is, as shown in FIG. **4****,** configured to have a U-shaped cross section which is opened to the right side and to form a closed-cross section cooperatively with the side sill **10.** Specifically, the lower-side reinforcement portion **73** is joined to the lower-side outer wall portion **65a** and the lower-side connection wall portion **65c** such that this portion **73** extends beyond or straddles the ridgeline between the lower-side outer wall portion **65a** and the lower-side connection wall portion **65c** and thereby the closed-cross section is formed. Thereby, the lower-side reinforcement portion **73** reinforces the inner lower portion **65** (particularly, the lower-side connection portion **65c**) against the above-described collision load.

The lower-side reinforcement portion **73** is provided to overlap with the upper-side side-sill flange **13** and the side-sill side wall portion **12c** of the side sill **10 in** the vehicle side view (i.e., when viewed from the vehicle width direction). Further, the lower-side reinforcement portion **73** is provided over a nearly entire part of the inner lower portion **65** (except a portion near its rear end), including a portion of the peripheral portion of the door inner panel **61** which corresponds to the first floor cross member **17** (a central portion, in the longitudinal direction, of the inner lower portion **65**). That is, the lower-side reinforcement portion **73** is provided at the peripheral portion of the door inner panel **61** so as to overlap with the first floor cross member **17** in the vehicle side view (i.e., when viewed from the vehicle width direction).

The upper-side reinforcement portion **74** is a patch member which is attached along a left-side face of the upper-side connection wall portion **67c** of the window frame portion **67** as shown in FIG. **7****,** and this reinforcement portion **74** reinforces the window frame portion **67** (particularly, the upper-side outer wall portion **67a** and the upper-side connection wall portion **67c**) against the collision load. The upper-side reinforcement portion **74** is provided to overlap with the roof-side flange **34** of the roof-side outer panel **33** in the vehicle side view (i.e., when viewed from the vehicle width direction). Further, the upper-side reinforcement portion **74** is provided at a portion of the peripheral portion of the door inner panel **61** which includes a portion corresponding to the roof cross member **36.** That is, the upper-side reinforcement portion **74** is provided at the peripheral portion of the door inner panel **61** such that at least a part of the upper-side reinforcement portion **74** is located substantially at the same position, in the longitudinal direction, as the roof cross member **36.**

The door outer panel **62** is made by processing a sheet of steel plate similarly to the door inner panel **61.** The door outer panel **62** determines an outer shape (contour) of the front side door **5,** when viewed from an outward side, in the vehicle width direction, of the vehicle **1** as shown in FIG. **1****.**

Herein, the rear side door **6** also comprises, similarly to the front side door **5,** a door panel portion which is configured to close the rear-side opening portion **4** and such that its peripheral part overlaps with the vehicle-body frame member **2** (the side sill **10,** the roof side rail **31,** the center pillar **40,** the wheel arch **50,** and the quarter pillar **51**) in the vehicle side view and plural reinforcement portions which are provided at a peripheral part of the door panel portion (at a peripheral part of its door inner panel, for example) so as to reinforce this peripheral part against a collision load inputted (applied) to the rear side door **6** from the vehicle outward side. These reinforcement portions are provided at respective portions of the peripheral part of the door panel portion of the rear side door **6** which overlap with the center pillar **40,** the wheel arch **50,** the side sill **10,** and the roof side rail **31** in the vehicle side view (i.e., when viewed from the vehicle width direction).

Similarly to the front side door **5,** the reinforcement portion provided at the portion of the peripheral part of the door panel portion of the rear side door **6** so as to overlap with the center pillar **40** in the vehicle side view is configured to extend up to a corner portion which is positioned between a lower portion and a front portion of the peripheral part of the door panel portion of the rear side door **6.** This corner portion comprises a front-lower curved wall portion which extends in the vehicle width direction and in the peripheral direction of the peripheral part of the door panel portion and is configured to be curved in the vehicle side view. The reinforcement portion which is provided at this corner portion is provided with a front-side curved portion at an inside part (or an inside), particularly in a radial direction, of the corner portion. This front-side curved portion is configured to be curved convexly toward an outside part, particularly in the radial direction, of this corner portion in the vehicle side view (i.e., when viewed from the vehicle width direction). The front-side curved portion of the reinforcement portion extends along the above-described front-lower curved wall portion and is fixed to this front-lower curved wall portion of the corner portion. Likewise, the reinforcement portion provided at the portion of the peripheral part of the door panel portion of the rear side door **6** so as to overlap with the wheel arch **50** in the vehicle side view is configured to extend up to a corner portion which is positioned between the lower portion and a rear portion of the peripheral part of the door panel portion of the rear side door **6.** This corner portion comprises a rear-lower curved wall portion which extends in the vehicle width direction and in the peripheral direction of the peripheral part of the door panel portion and is configured to be curved in the vehicle side view. The reinforcement portion which is provided at this corner portion is provided with a rear-side curved portion at an inside part (or an inside), particularly in a radial direction, of the corner portion. This rear-side curved portion is configured to be curved convexly toward an outside part, particularly in a radial direction, of this corner portion in the vehicle side view (i.e., when viewed from the vehicle width direction). The rear-side curved portion of the reinforcement portion extends along the above-described rear-lower curved wall portion and is fixed to this rear-lower curved wall portion of the corner portion.

Herein, the vehicle-body structure of the vehicle **1** is required to suppress the center pillar **40** from coming into the cabin as much as possible in the vehicle side view. In the case where the first and second impact bars **81, 82** are provided like the present embodiment, the collision load of the vehicle side collision can be absorbed to a certain degree by these impact bars **81, 82.** However, since the vehicle-body frame member **2** receives the load transmitted from the impact bars **81, 82** at a point, there is a concern that the efficiency of the collision-load transmission to the vehicle-body frame member **2** may be low.

If a door frame member (a member having a closed-cross section, for example) is arranged between the door inner panel **61** and the door outer panel **62** like a conventional side door, the transmission efficiency of the collision load may be improved. However, since the weight reduction of the vehicle **1** is recently required from viewpoints of the fuel efficiency and the like, it is preferable that no door frame member be arranged.

Herein, according to the present embodiment, buckling deformation of the door inner panel **61** is particularly suppressed in the vehicle side collision by providing the reinforcement portions **71 - 74** (particularly, the front-side reinforcement portion **71** which is provided at the portion overlapping with the hinge pillar **20** in the vehicle side view and extends up to the corner portion positioned between the inner front portion **63** and the inner lower portion **65** at the peripheral portion of the door inner panel **61** and/or the rear-side reinforcement portion **72** which is provided at the portion overlapping with the center pillar **40** in the vehicle side view and extends up to the corner portion positioned between the inner rear portion **64** and the inner lower portion **65** at the peripheral portion of the door inner panel **61**) at the door inner panel **61** as described above so that the collision load can be efficiently transmitted to the vehicle-body frame member **2.**

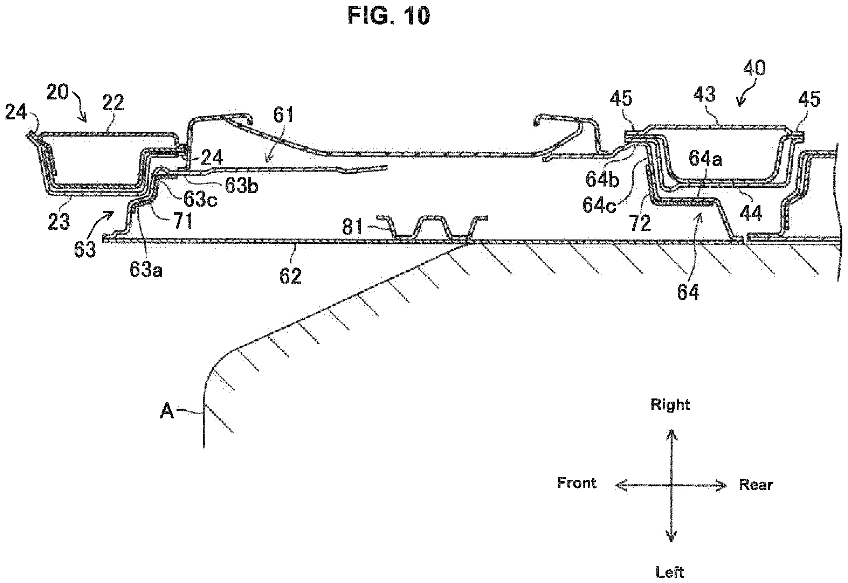

Hereafter, a motion of the door panel portion **60** in the vehicle side collision will be described referring to an example of the vehicle side collision shown in FIGS. **10 - 14****.** Herein, FIGS. **10 - 14** show a case where a collision object **A** collides with the left-side part of the vehicle **1.** Further, FIGS. **10 - 14** show the motion of the door panel portion **60** of the front side door **5,** omitting illustration of a motion regarding the rear side door **6.**

A situation where the collision object **A** (another vehicle, for example) moves toward the center pillar **40** and then contacts the left-side part of the vehicle **1** as shown in FIG. **10** is assumed here. Herein, the inner rear portion **64** is in a state where it is interposed between the center pillar **40** and the collision object **A.**

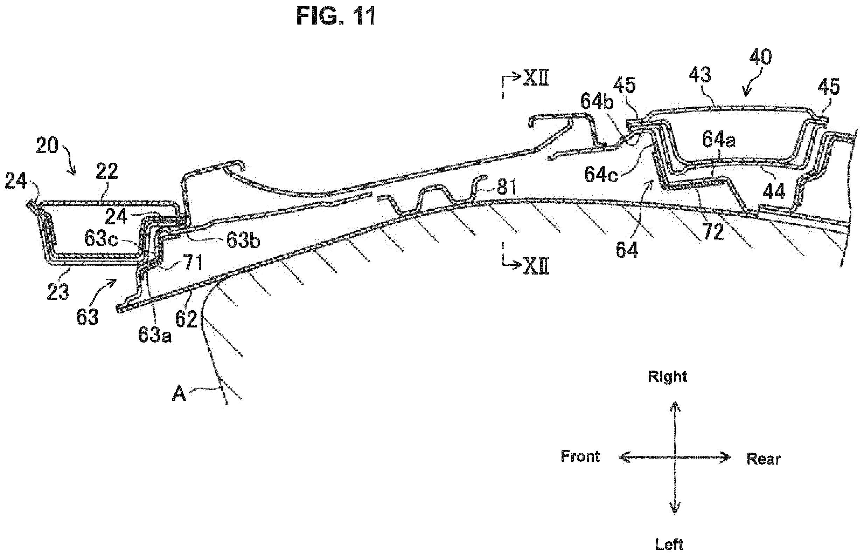

When the collision object **A** comes in as shown in FIG. **11** from the state shown in FIG. **10****,** a load directed to a cabin inside (to the right side in this figure) is inputted (applied). Herein, the front side door **5** is moved (pushed) to the right side and deformed such that its rear side is positioned at the right side. Accordingly, as shown in FIG. **11****,** the inner front portion **63** and the rear-side hinge-pillar flange **24** of the hinge pillar **20** come to contact each other, and the inner rear portion **64** and the front-side center-pillar flange **45** of the center pillar **40** come to contact each other. At this moment, the inner front portion **63** transmits the collision load to the hinge pillar **20** and also receives a reaction load from the hinge pillar **20.** Further, the inner front portion **63** receives a force directed to the inside, in the surface direction, of the door inner panel **61** (to the rear side in this figure) through this coming-in of the collision object **A.** Meanwhile, the inner rear portion **64** transmits the collision load to the center pillar **40** and also receives a reaction load from the center pillar **40.**

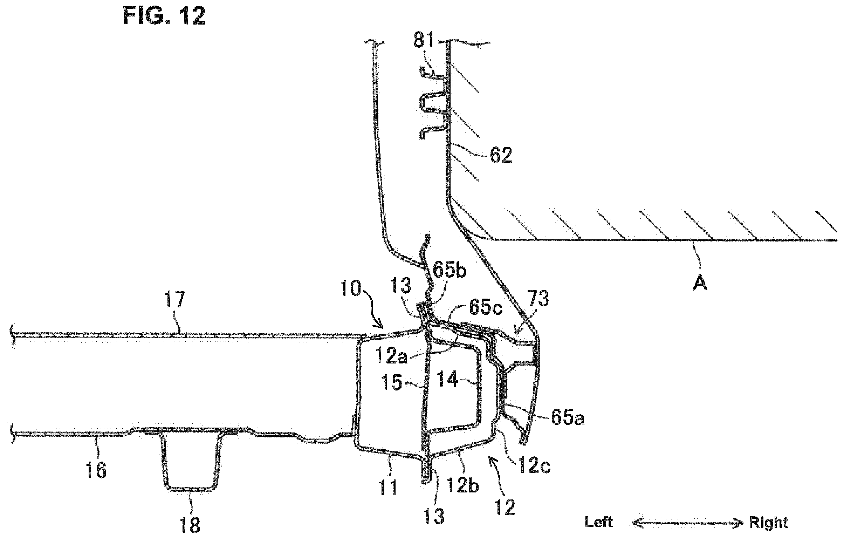

Further, as shown in FIG. **12****,** the inner lower portion **65** comes to contact the upper-side side-sill flange **13** and the side-sill side wall portion **12c** of the side sill **10.** Accordingly, the inner lower portion **65** transmits the collision load to the side sill **10** and also receives a reaction force from the side sill **10.** Further, the inner lower portion **65** receives the force directed to the inside, in the surface direction, of the door inner panel **61** (to the upper side in this figure) through the coming-in of the collision object **A.**

Also, the widow frame portion **67** comes to contact the roof side rail **31,** which is not illustrated. Accordingly, the widow frame portion **67** transmits the collision load to the roof side rail **31** and also receives a reaction force from the roof side rail **31.** Further, the roof side rail **31** receives the force directed to the inside, in the surface direction, of the door inner panel **61** (to the lower side in this figure) through the coming-in of the collision object **A.**

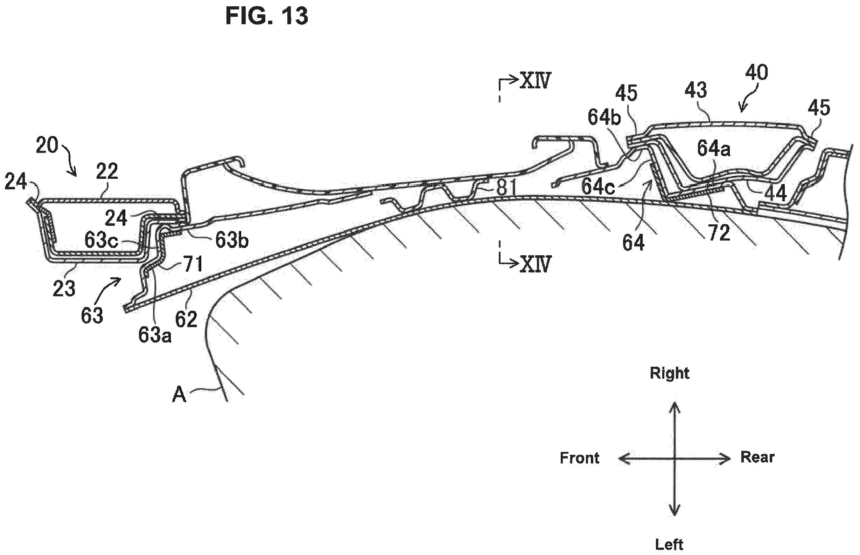

A situation where the collision object **A** further comes to the right side from the state of FIG. **11** as shown in FIG. **13** is assumed here. The inner front portion **63** is suppressed from being deformed by the front-side reinforcement portion **71.** Particularly, the front-side reinforcement portion **71** suppresses the front-side outer wall portion **63a** from being rotated (rotational deformation) to the inside, in the surface direction, of the door inner panel **61** with a support point of the ridgeline between the front-side outer wall portion **63a** and the front-side connection wall portion **63c** and also suppresses the front-side connection wall portion **63c** from being bent (bucking deformation) to the inside, in the surface direction, of the door inner panel **61.** Thereby, the inner front portion **63** maintains its contact state (or its connection state) with the hinge pillar **20,** without coming into the cabin at a position right behind the hinge pillar **20.** Meanwhile, in this example of the vehicle side collision, since the inner rear portion **64** is interposed between the collision object **A** and the center pillar **40** in this collision situation, a contact state (or a connection state) of the inner rear portion **64** and the center pillar **40** is maintained. Thus, the transmission of the collision load from the inner front portion **63** to the hinge pillar **20** can be maintained and also the transmission of the collision load from the inner rear portion **64** to the center pillar **40** can be maintained.

As described above, since the front-side reinforcement portion **71** overlaps with the instrument-panel member **26** in the vehicle side view (i.e., when viewed from the vehicle width direction), the collision load of the vehicle side collision is transmitted from the door inner panel **61** (the portion where the front-side reinforcement portion **71** is provided) to the instrument-panel member **26** by way of the hinge pillar **20.** Since it is the vehicle-body frame member extending in the vehicle width direction, the instrument-panel member **26** can receive the collision load properly. Further, since the front-side lower portion of the rear-side reinforcement portion **72** is located substantially at the same position, in the vehicle longitudinal direction, as the second floor cross member **47** as described above, the collision load of the vehicle side collision is transmitted from the door inner panel **61** (the portion where the rear-side reinforcement portion **72** is provided) to the second floor cross member **47** by way of the center pillar **47** and the side sill **10.** Herein, since it is the vehicle-body frame member extending in the vehicle width direction extends in the vehicle width direction, the second floor cross member **47** can receive the collision load properly.

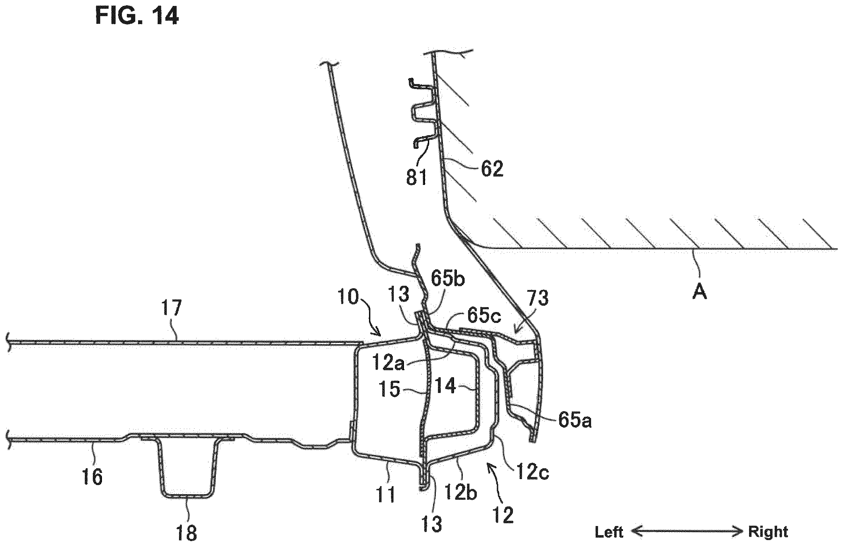

Further, as shown in FIG. **14****,** it is suppressed by the lower-side reinforcement portion **73** that the inner lower portion **65** is deformed in such a manner that this inner lower portion **65** rides over the side sill **10.** Particularly, the lower-side reinforcement portion **73** suppresses the lower-side outer wall portion **63a** from being rotated (rotational deformation) to the inside, in the surface direction, of the door inner panel **61** with a support point of the ridgeline between the lower-side outer wall portion **63a** and the lower-side connection wall portion **65c** and also suppresses the lower-side connection wall portion **65c** from being bent (buckling deformation) to the inside, in the surface direction, of the door inner panel **61.** Thereby, the inner lower portion **65** maintains its contact state (or its connection state) with the side sill **10,** without coming into the cabin at a position right above the side sill **10.** Consequently, the transmission of the collision load from the inner lower portion **65** to the side sill **10** can be maintained.

As described above, since the lower-side reinforcement portion **73** overlaps with the first floor cross member **17** in the vehicle side view (i.e., when viewed from the vehicle width direction), the collision load of the vehicle side collision is transmitted from the door inner panel **61** (the portion where the lower-side reinforcement portion **73** is provided) to the first floor cross member **17** by way of the side sill **10.** Since it is the vehicle-body frame member extending in the vehicle width direction, the first floor cross member **17** can receive the collision load properly.

Further, the upper-side outer wall portion **67a** and the upper-side connection wall portion **67c** of the window frame portion **67** are suppressed from having buckling deformation by the upper-side reinforcement portion **74,** which is not illustrated. Thereby, the contact state (or the connection state) of the window frame portion **67** and the roof side rail **31** is maintained, without coming into the cabin at a position right below the roof side rail **31.** Consequently, the transmission of the collision load from the window frame portion **67** to the rood side rail **31** can be maintained.

Since at least part of the upper-side reinforcement portion **74** is located substantially at the same position, in the vehicle longitudinal direction, as the roof cross member **36** at the peripheral portion (upper portion) of the door inner panel **61** as described above, the collision load of the vehicle side collision is transmitted from the door inner panel **61** (the portion where the upper-side reinforcement portion **74** is provided) to the roof cross member **36** by way of the roof side rail **31.** Since it is a vehicle-body frame member extending in the vehicle width direction, the roof cross member **36** can receive the collision load properly.

Herein, since the front-side reinforcement portion **71** is provided at the corner portion positioned between the inner front portion **63** and the inner lower portion **65** of the peripheral portion of the door inner panel **61,** this corner portion is particularly suppressed from being deformed in the vehicle side collision. Consequently, portions (the inner front portion **63** and the inner lower portion **65**) of the peripheral portion of the door inner panel **61** which are positioned on both sides of this corner portion are reinforced so effectively that it is suppressed more properly that these portions of the peripheral portion of the door inner panel **61** come into the cabin in the vehicle side collision. Further, the rear-side reinforcement portion **72** provided at the corner portion positioned between the inner rear portion **64** and the inner lower portion **65** of the peripheral portion of the door inner panel **61** performs the same effect as the front-side reinforcement portion **71.** Thereby, portions (the inner rear portion **64** and the inner lower portion **65**) of the peripheral portion of the door inner panel **61** which are positioned on both sides of this corner portion are reinforced so effectively that it is suppressed more properly that these portions of the peripheral portion of the door inner panel **61** come into the cabin in the vehicle side collision. Accordingly, the collision load of the vehicle side collision is dispersed and transmitted from the peripheral part of the front side door **5** to the vehicle-body frame member **2,** so that the amount of absorption of this collision load can be effectively increased.

Further, the stress concentration which may occur at the inside part of the corner portion of the front-side reinforcement portion **71** which is positioned between the inner front portion **63** and the inner lower portion **65** can be reduced by the front-side curved portion **71a** of the front-side reinforcement portion **71.** Also, the stress concentration which may occur at the inside part of the corner portion of the rear-side reinforcement portion **72** which is positioned between the inner rear portion **64** and the inner lower portion **65** can be reduced by the rear-side curved portion **72a** of the rear-side reinforcement portion **72.** Accordingly, the dispersion and transmission of the collision load from the front side door **5** to the vehicle-body frame member **2** can be properly attained.

Meanwhile, it is unnecessary that the plate thickness of the first impact bar **81** and the second impact bar **82** is made thick or these bars are made of a frame member having a closed-cross section in order to increase the amount of absorption of the collision load in the vehicle side collision. It is also unnecessary that the number of impact bar is increased or a new impact bar is added. Consequently, the weight reduction of the front side door **5** can be attained. The weight reduction of the rear side door **6** can be attained as well.

Accordingly, the weight reduction of the vehicle 1 and increasing of the amount of absorption of the collision load in the vehicle side collision can be compatibly attained.

The present invention should not be limited to the above-described embodiment and any other modifications or improvements may be applied within the scope of the present invention.

For example, while the reinforcement portions **71** - **74** are provided at the door inner panel **61** in the above-described embodiment, these portions may be provided at a peripheral portion of the door outer panel **62** as the door panel portion **60.** In this case, like the above-described embodiment, the front-side reinforcement portion **71** is provided at a corner potion positioned between a lower portion and a front portion of a peripheral portion of the door outer panel **62,** and the rear-side reinforcement portion **72** is provided at a corner potion positioned between the lower portion and a rear portion of the peripheral portion of the door outer panel **62.** Even in a case where the reinforcement portions **71** - **74** are provided at the door outer panel **62,** it is suppressed that the side door is pushed into the cabin in the vehicle side collision, so that a contact state of the door outer panel **62** and the vehicle-body frame member **2** is maintained like the above-described embodiment.

Further, while the case where the contact state of the door inner panel **61** and the vehicle-body frame member **2** is maintained in the vehicle side collision is described in the above-described embodiment, an engagement state of the door panel portion **60** and the vehicle-body frame member **2** may be maintained by providing catcher pins as the reinforcement portions **71 - 74.**

Moreover, while the door inner panel **61** (the inner lower portion **65**) forms the closed-cross section together with only the lower-side reinforcement portion **73** in the above-described embodiment, the front-side reinforcement portion **71,** the rear-side reinforcement portion **72,** or the upper-side reinforcement portion **74** may form a closed-cross section together with the door inner panel **61.** On the contrary, the lower-side reinforcement portion **73** may be a patch member attached along the wall portions of the door inner panel **61,** similarly to the front-side reinforcement portion **71** and so on.

Also, a part or a whole part of the reinforcement portions **71 - 74** may not be configured to be a separate member from the door inner panel **61.** In this case, the reinforcement portions **71 - 74** can be configured by making the plate thickness of a portion of the door inner panel **61** which corresponds to the reinforcement portions **71 - 74** thicker than the other part of the door inner panel **61,** for example.

Further, while the reinforcement portions are the front-side reinforcement portion **71,** the rear-side reinforcement portion **72,** the lower-side reinforcement portion **73,** and the upper-side reinforcement portion **74** in the above-described embodiment, any other reinforcement portion may be omitted as long as at least the rear-side reinforcement portion **72** is provided at the corner portion positioned between the inner rear portion **64** and the inner lower portion **65** of the peripheral portion of the door inner panel **61** as the reinforcement portion. In this case, it is preferable that the rear-side reinforcement portion **72** be configured to extend forwardly and upwardly from the above-described corner portion. The both-side portions (the inner rear portion **64** and the inner lower portion **65**) of this corner portion at the peripheral portion of the door inner panel **61** are so effectively reinforced only by the rear-side reinforcement portion **72** that it can be properly suppressed that the above-described both-side portions come into the cabin in the vehicle side collision. Thereby, it can be also suppressed that the other portion than the above-described both-side portions come into the cabin in the vehicle side collision. Or, only the above-described front-side reinforcement portion **71** or only the front-side reinforcement portion **71** and the rear-side reinforcement portion **72** may be provided as the reinforcement portion.

## Claims

1. A vehicle-body structure of a vehicle (1), comprising:
a vehicle-body frame member (2) forming an opening portion (3) for entrance at a vehicle side part; and
a side door (5) provided so as to open and/or close the opening portion (3),
wherein the side door (5) comprises a door panel portion (60) and a reinforcement portion (71, 72), the door panel portion (60) being provided to cover the opening portion (3) and configured such that a peripheral part thereof overlaps with the vehicle-body frame member (2) in a vehicle side view, the reinforcement portion (71, 72) being provided at least one of a corner portion which is positioned between a lower portion (65) and a front-side portion (63) of the peripheral part of the door panel portion (60) and another corner portion which is positioned between the lower portion (65) and a rear-side portion (64) of the peripheral part of the door panel portion (60) such that the reinforcement portion (71, 72) overlaps with the vehicle-body frame member (2) in the vehicle side view, thereby reinforcing the corner portion against a collision load applied to the side door (5) from a vehicle side, and
the reinforcement portion (71, 72) is provided with a curved portion (71a, 72a) at an inside of the corner portion where the reinforcement portion (71, 72) is provided, the curved portion (71a, 72a) being configured to be curved convexly toward an outside part of the corner portion in the vehicle side view.

2. The vehicle-body structure of the vehicle (1) of claim 1, wherein the curved portion (71a, 72a) is at the inside of the corner portion in a radial direction of the corner portion.

3. The vehicle-body structure of the vehicle (1) of claim 2, wherein the curved portion (71a, 72a) is configured to be curved convexly toward the outside part of the corner portion in the radial direction of the corner portion.

4. The vehicle-body structure of the vehicle (1) of the any one of the preceding claims, wherein the reinforcement portion (72) is provided at the corner portion of the peripheral part of the door panel portion (60) which is configured to be located at, or corresponds to a connection portion of a side sill (10) and a center pillar (40) which constitute the vehicle-body frame member (2).

5. The vehicle-body structure of the vehicle (1) of any one of the preceding claims, wherein the corner portion of the peripheral part of the door panel portion (60) where the reinforcement portion (71, 72) is provided comprises a curved wall portion (68) which extends in a vehicle width direction and in a peripheral direction of the peripheral part of the door panel portion (60) and is configured to be curved in the vehicle side view.

6. The vehicle-body structure of the vehicle (1) of claim 5, wherein
the curved portion (71a, 72a) of the reinforcement portion (71, 72) extends along the curved wall portion (68) of the corner portion.

7. The vehicle-body structure of the vehicle (1) of claim 5 or 6, wherein
the curved portion (71a, 72a) of the reinforcement portion (71, 72) is fixed to the curved wall portion (68) of the corner portion.

8. The vehicle-body structure of the vehicle (1) of any one of the preceding claims, wherein the side door (5) further comprises an impact bar (81), which is particularly configured to absorb the collision load, and
a one-end portion of the impact bar (81) is fixed to the corner portion of the door panel portion (60) where the reinforcement portion (72) is provided.

9. The vehicle-body structure of the vehicle of claim 8, wherein the reinforcement portion (71, 72) is configured to overlap with the impact bar (81).

10. The vehicle-body structure of the vehicle of any one of the preceding claims, wherein the reinforcement portion (72) is located at the same position, in the longitudinal direction, as a floor cross member (47).

11. The vehicle-body structure of the vehicle of any one of the preceding claims, wherein the side door (5) is a front side door (5).

12. The vehicle-body structure of the vehicle of any one of the preceding claims, wherein the side door is a rear side door (6).

13. A vehicle comprising the vehicle-body structure of any one of the preceding claims.
